# EUROPEAN PATENT APPLICATION

(11) **EP 2 590 389 A1**
(43) Date of publication of application: **08.05.2013**
(21) Application number: 10854065.9
(22) Date of filing: 29.06.2010
(51) Int. Cl.: H04M 1/667, H04M 1/725

(54) **MOBILE COMMUNICATION TERMINAL, METHOD FOR ACTIVATING SAME, AND NETWORK COMMUNICATION SYSTEM**

(71) Applicant: Suginaka, Junko, Minato-ku, Tokyo 105-0001 (JP)
(72) Inventor: FURUKAWA Yoshihisa, Tokyo 102-0094 (JP); TEBAKA Tomohiro, Tokyo 102-0094 (JP); OIKE Toshihiro, Tokyo 102-0094 (JP)
(74) Representative: Peter, Julian
(86) International application number: PCT/JP2010/061045
(87) International publication number: WO 2012/001768

(57) **Abstract**

A mobile communication terminal (3) includes a first CPU (31) that controls transmission of information to and reception of information from another communication apparatus via a first network in response to an operation to an operation unit (34) of a main body (30) of the mobile communication terminal. The mobile communication terminal (3) includes a lock (38) that is formed on an appropriate location of the main body (30) and permits a unique key (39) to be paired with the main body to be set therein, a key signal generator (37) that generates a key signal when the unique key (39) to be paired is inserted in the lock (38), a startup processor (322 and 323) that, in response to a reception of the key signal from the key signal generator (37), starts up a second CPU (32) that executes transmission and reception of information via a second network instead of the first network.

## Description

### Technical Field

The present invention relates to a technique of a mobile communication terminal and the like, having a CPU that controls transmission of information to and reception of information from another a communication apparatus via a network in response to an operation to an operation unit of a main body of the mobile communication terminal.

### Background Art

Recently, cell phones have provided not only a talk function, but also a variety of other functions including e-mail, information searching and viewing, and electronic payment. To perform these functions, cell phones store a variety of important information. The important information includes an e-mail address of a communication partner for the e-mail function, and bank account and private code for the electronic payment. If a cell phone is stolen, and used illegally by another person, an unauthorized use results. For example, the unauthorized use may include identify theft, and theft of money, and fraudulent use of personal information. Techniques disclosed in related art to control the unauthorized use of the cell phone include performing personal authentication by requesting a user to input a password, or by requesting the user to input fingerprint when the cell phone is used.

Patent Literature 1 describes a personal authentication technique. According the disclosed personal authentication technique, a vein pattern at a predetermined location of the body of an owner of a cell phone is photographed using each of visible light and infrared light, the vein pattern is determined from image data resulting from photographing using both visible light and infrared light, and the determined vein pattern is checked against a pre-registered reference pattern of vein of the owner to authenticate the owner. The use of plural pieces of information in this way controls identity fraud even better than the checking method of using the password and fingerprint. Information security of the cell phone is thus increased. The technique disclosed in Patent Literature 1 theoretically raises an authentication level to some extent in that a fingerprint of the surface of a living subject is not used.

Recently, a variety of computer viruses and the like have entered information processing apparatuses including servers and terminals (personal computers) connected to a network such as the Internet, and have hidden there. As a result, data in the information processing apparatus have suffered from various damages including thefts, intercepts, tampering, leaks, and attacks. In response to such computer virus damages, countermeasures are taken to prevent viruses from entering as much as possible. The countermeasures include developing and improving software to detect and nullify viruses, and imposing line constraints (address constraints). However, completely preventing viruses from entering the information processing apparatus seems difficult in view of a time lag from a detection of a new type of virus to a development of software to nullify the virus. It is also likely that the information processing apparatus is infected with a virus during a startup period subsequent to power-on, and an anti-virus action even effective during the startup period is also desired.

Patent Literature 2 describes an OS (Operation System) startup method stored on a hard disk in an information processing apparatus. More in detail, when a switch-on operation of the information processing apparatus is detected, BIOS (Basic Input/Output System) stored on a flash memory starts up, searches for a boot device that remains bootable, starts up a boot OS stored on a USB (Universal Serial Bus) memory, and first causes display means to display a password input screen. Next, the information processing apparatus receives a password input on the password input screen from input means. Upon receiving the password, the information processing apparatus links the input password to information unique to the USB memory, converts the linked input password into a hash value, and then generates a unlock password of a hard disk that is to be started up. If the information processing apparatus determines that the hard disk to be started up has been security set, the information processing apparatus unlocks the hard disk with the unlock password. If the information processing apparatus determines that the hard disk to be started up has not been security set, the information processing apparatus sets security of the hard disk, starts up MBR (Master Boot Record) of the hard disk in an unlocked state, and starts up a boot loader of the OS. The method of starting up the OS of Patent Literature 2 has been discussed. Security authentication at the OS startup can thus be performed. Patent Literature 2 also describes a virus check of the hard disk that can be performed with the hard disk in an unlocked state using a virus check function stored on the USB memory.

Patent Literature 3 describes a multi-core type cell phone based on a technique that prevents a program from being analyzed, or tampered or modified during execution of the program. More in detail, a second CPU having tamper-resistance is provided in addition to a first CPU. An executable code of an application program having at least one class including the executable code is loaded on a memory of the second CPU and then executed by the second CPU so that the analysis and tampering of an execution code portion using a debugger or the like during execution is set to be difficult. The application is thus protected from unauthorized action.

### Citation List

### Patent Literature

[Patent Literature 1] Japanese Unexamined Patent Application Publication No. 2006-148478
[Patent Literature 2] Japanese Unexamined Patent Application Publication No. 2007-66123
[Patent Literature 2] WO2007/011001

### Summary of Invention

### Technical Problem

The cell phone disclosed in Patent Literature 1 has several problems including using two types of light including visible light and infrared light, and needing a complicated process of extracting an image of veins in the skin from the photographed image. Since authentication is performed in the same manner as with fingerprint and the like by comparing acquired biometric information with pre-registered information, an authentication rate is subject to a limitation. In particular, authentication is performed based on a comparison process of information, and these pieces of information, if illegally obtained, may lead to identity fraud.

Patent Literature 2 relates to a personal authentication technique. A password can be stolen because the password is input on a password input screen. For this reason, the password is linked with unique information of a USB memory to produce a hash value, and the hash value is then used as lock canceling information. Patent Literature 2 also describes that the computer virus check of the hard disk is performed using a virus check function stored on a USB memory, but does not specifically describe the computer virus check at all.

The technique described in Patent Literature 3 merely separately processes an execution code portion and an application program portion.

It is an object of the present invention to provide a mobile communication terminal that, only when a key to be paired with a lock is used, provides a particular use mode environment featuring high security instead of a standard use mode by mechanically coupling the lock serving as a structural feature of a main body with the key serving as an additional structure to be paired with the lock. It is an object of the present invention to provide a startup method of the mobile communication terminal, and a network communication system.

### Solution to Problem

The present invention relates to a mobile communication terminal that includes a first CPU that controls transmission of information to and reception of information from another communication apparatus via a first network in response to an operation to an operation unit of a main body of the mobile communication terminal. The mobile communication terminal includes a lock that is formed on an appropriate location of the main body and permits a unique key to be paired with the main body to be set therein, key signal generator means that generates a key signal when the unique key to be paired is set in the lock, and startup means that, in response to a reception of the key signal from the key signal generator means, starts up a second CPU that executes transmission and reception of information via a second network instead of the first network.

The present invention relates to a startup method of a mobile communication terminal having a first CPU that controls transmission of information to and reception of information from another communication terminal via a first network in response to an operation to an operation unit of a main body of the mobile communication terminal. The startup method includes a step of generating by key signal generator means a key signal when a unique key to be paired with the main body is set in a lock formed on an appropriate location of the main body, and a step of starting up, by startup means in response to a reception of the key signal from the key signal generator means, a second CPU that executes transmission and reception of information via a second network instead of the first network.

The present invention relates to a network communication system that includes the mobile communication terminal according to one of Claims 1 through 8 connected to the first and second networks, and a computer terminal connected to the second network, wherein information is transmitted and received between the mobile communication terminal and the computer terminal if the second CPU is started up.

As an ordinary communication apparatus, the mobile communication terminal of the present invention controls transmission of information to and reception of information from another communication apparatus via a generally used first network in response to an operation performed on an operation unit of the main body. If the unique key is set in the lock formed at the appropriate location of the main body, the key signal generator means generates the key signal. Upon receiving the key signal, the startup means starts up the second CPU. The second CPU executes transmission and reception of information via the second network different from the first network. Since information is transmitted and received via the second network under the second CPU, the information is isolated from information transmitted and received via the first network. The second network is set to be a high security network accordingly.

### Advantageous Effects of Invention

According to the present invention, the lock serving as a structural feature of the main body is mechanically coupled with the key serving as an additional structure to be paired with the lock. Only when the key to be paired is used, a particular use mode environment featuring high security is provided instead of a standard use mode.

### Brief Description of Drawings

FIG. 1 is a general view illustrating a network communication system including a cell phone as a mobile communication terminal of an embodiment of the present invention.
FIG. 2 is a block diagram illustrating an example of a hardware configuration of the cell phone of FIG. 1.
FIGS. 3A and 3B illustrate a lock structure of the cell phone and a structure of a unique key serving as an accessory, wherein FIG. 3A is a partial perspective view illustrating a key hole, and FIG. 3B is a partial view illustrating a relationship between the lock and the key.
FIG. 4 is a flowchart illustrating an example of a routine of a startup process executed by a CPU 31 at power-on.
FIG. 5 is a flowchart illustrating an example of a routine of a startup process executed by a CPU 32 at power-on.
FIG. 6 is a flowchart illustrating an example of a routine of an interrupt process executed by CPUs 31 and 32.
FIG. 7 is a flowchart illustrating an example of a routine of a startup continuation process of BIOS 1 executed by the CPU 31.
FIG. 8 is a flowchart illustrating an example of a routine of a startup continuation process of BIOS 2 executed by the CPU 32.
FIG. 9 is a flowchart illustrating an example of a routine of an authentication request process executed by the CPU 32.
FIG. 10 is a flowchart illustrating an example of a routine of an authentication process executed by a controller 61 in an authentication server 6.
FIG. 11 is a flowchart illustrating an example of a routine of a retrieval process of a certificate performed as an example of transmission and reception of information with a computer terminal 21 by the CPU 32 in a particular mode.

### Description of Embodiments

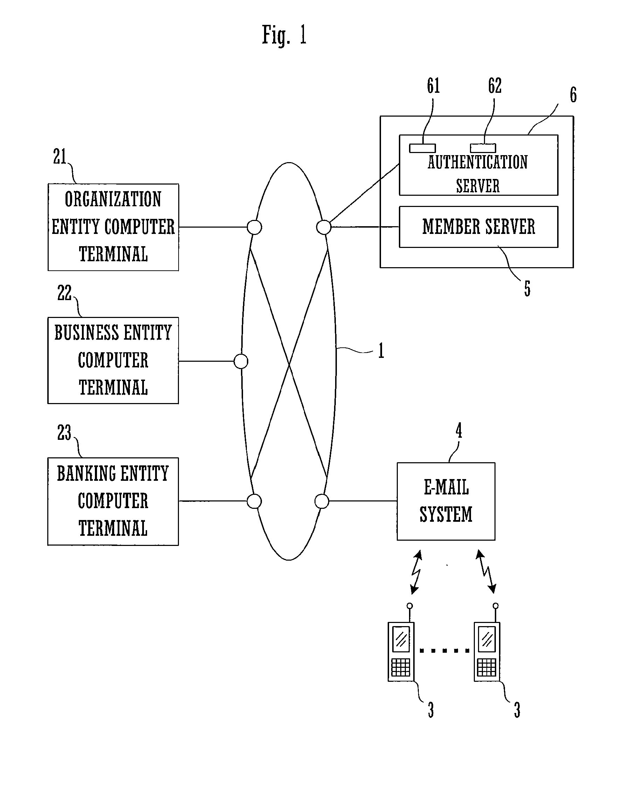

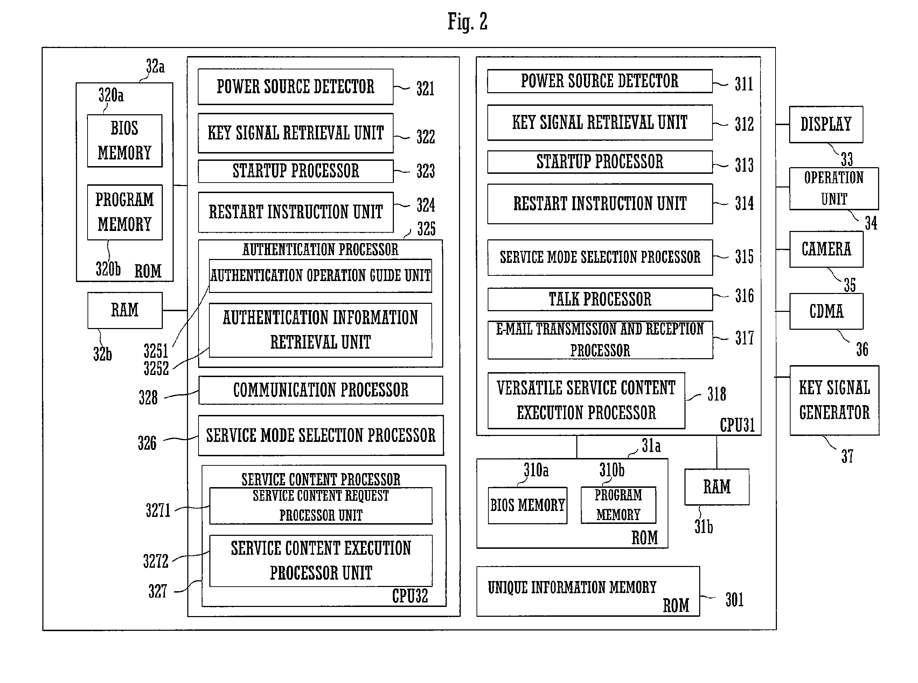

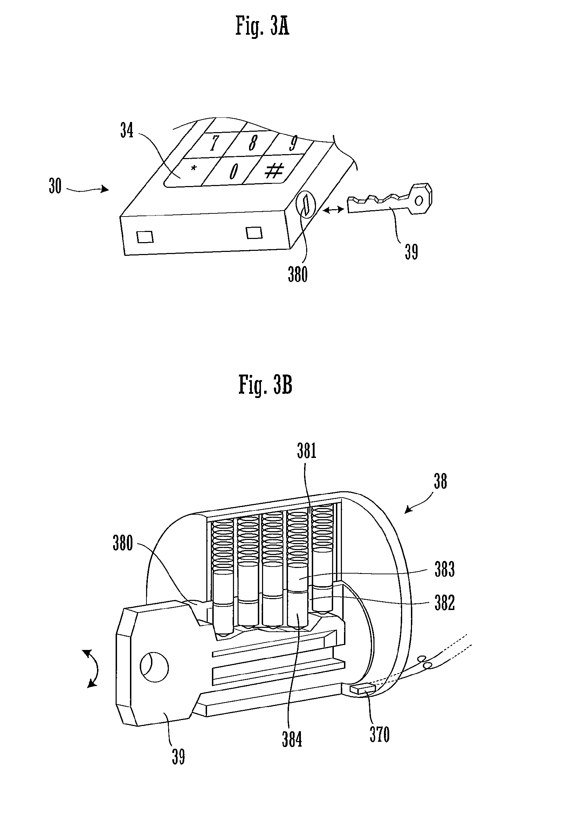

FIG. 1 is a general view illustrating a network communication system including a cell phone as a mobile communication terminal of an embodiment of the present invention. FIG. 2 is a block diagram illustrating an example of a hardware configuration of the cell phone of FIG. 1. FIGS. 3A and 3B illustrate a lock structure of the mobile phone and a structure of a unique key serving as an accessory. FIG. 3A is a partial perspective view illustrating a key hole, and FIG. 3B is a partial view illustrating a relationship between the lock and the key.

The network communication system of FIG. 1 includes a network 1, such as the Internet and the like, a computer terminal 21 installed for one kind or several kinds of organizations, and cell phones 3 respectively owned by a plurality of members and enabled to transmit information to and receive information from the computer terminal 21. For example, the computer terminal 21 may be installed at a local government to issue a variety of documents, such as a certificate, requested by a member (issue service of certificate and the like). In this way, the computer terminal 21 is installed at public or semi-public organizations (including a private organization) (such as national body (agencies), local government, associates, and unions), which create, store, and manage personal information. The computer terminal 21 thus applies information communications with cell phones 3. The information communications include issuance of a variety of certificates by the local government, transmission of application forms, and reception of guide documents.

The cell phone 3 may communicate with another cell phone or an unillustrated fixed-line phone via an unillustrated radio relay station. The cell phone 3 may also transmit an e-mail to and receive an e-mail from another cell phone via the unillustrated radio relay station and an e-mail system 4 or may transmit an e-mail to and receive an e-mail via the Internet 1 from another terminal connected to the Internet 1. The cell phone 3 may also view or retrieve desired information by browsing a variety of Websites arranged on the Internet. The e-mail system 4 of a cell phone company may be used for a mechanism for transmission and reception of an e-mail. A member (including an individual or an organization) who may wish a privilege to receive a predetermined service is granted a membership registration through a predetermined procedure, and then obtains the cell phone 3. When the member is registered, unique information to identify the cell phone 3 and other necessary information are written on an internal memory of the cell phone 3.

As illustrated in FIG. 2, the cell phone 3 is of a multi-core type. More specifically, the cell phone 3 includes first and second CPUs (Central Processing Units) 31 and 32 as general controllers. The CPU 31 is connected to a ROM (Read Only Memory) 31a and a RAM (Random Access Memory) 31b. The ROM 31a includes a BIOS memory 310a and a program memory 310b. The BIOS memory 310a stores BIOS 1 (Basic Input/Output system). The program memory 310b stores MBR (Master Boot Record) that is loaded when the BIOS 1 is executed, an OS that is loaded by a loader program, and a variety of application programs (hereinafter referred to as AP). The RAM 31b temporarily stores information in the middle of a process, and is used when the CPU 31 is started up. The OS (Operating System) and the AP written on the program memory 310b are program files (hereinafter referred to as general AP) to receive, via the cell phone 3, publicly provided services including general talk communication, e-mail, and information viewing and retrieval. In the following discussion, a state (mode) that allows the general AP to be usable is referred to a general mode.

The CPU 32 is connected to a ROM 32a and a RAM 32b. The ROM 32a includes a BIOS memory 320a and a program memory 320b. The BIOS memory 320a stores BIOS 2. The program memory 320b stores MBR (Master Boot Record) that is loaded when the BIOS 2 is executed, an OS that is loaded by a loader program, and a variety of application programs. The RAM 32b temporarily stores information in the middle of a process, and is used when the CPU 32 is started up. The OS (Operating System) and the AP written on the program memory 320b are program files (hereinafter referred to as a particular AP) to execute a process used to receive another particular service as described below that is different from the general AP of the cell phone 3. In the following discussion, a state (mode) that allows the particular AP to be usable is referred to a particular mode.

When a membership registration is performed as described previously, unique information to identify the cell phone 3 is written on a unique information memory 301. The unique information memory 301 is not rewritable. Also, the cell phone 3 includes display 33, operation unit 34, camera 35, and a processing unit to perform a process corresponding to a communication protocol, such as CDMA (Code Division Multiple Access) unit 36. The display 33 displays an image for verifying input information, presenting input guide, and displaying communication content. The operation unit 34 includes numeric keys, a touchpanel, etc. used for an operator to input a needed command and information. The camera 35 photographs a subject. CDMA is one of the protocols used in radio communication, such as cell phone, and the CDMA unit 36 is a processing unit that multiples each of speech signals of a plurality of senders by code different from speech signal to speech signal, combines these speech signals for synthesis, and transmits a synthesized signal on a single frequency. A receiver multiples the synthesized signal by a code of a partner who is talking with the operator. The receiver thus extracts only the speech signal of the partner.

Referring back to FIG. 1, the network 1 is connected to at least one member server 5 and an authentication server 6. The member server 5 stores, on a per member basis, appropriate information relating to a member who owns the computer terminal 21, and the cell phone 3 and controls an operation of the computer terminal 21 and the cell phone 3. For example, the appropriate information includes membership information such as a name, alias, e-mail address, and address of the member (also password as necessary). The member server 5 also stores (retains and manages), in addition to the membership information, information that can be supplied to the computer terminal 21 as necessary, such as software necessary to execute a service for the member, and a document creation program to produce a specific document, and further stores transaction content and log information of each member if the member server 5 is a high-memory-capacity server. Also, the member server 5 may include a memory that stores, for management purposes, transmission and reception log of a file of each member and the file and the like.

When the cell phone 3 has placed an authentication request, the authentication server 6 determines whether the cell phone 3 is a cell phone in accordance with which the member has been registered. If the authentication server 6 determines that the cell phone 3 is an authorized cell phone, the authentication server 6 executes an authentication determination process as to whether an operator is an authorized member. If the operator is authenticated, the authentication server 6 returns (issues) an authentication key to the cell phone 3 of an origin of the authentication request. The authentication server 6 includes a controller 61 including a computer that executes an authentication process responsive to a personal authentication request. The authentication server 6 also stores software that controls the authentication process, and stores reference information on a per member basis for use in checking information during authentication. The reference information for authentication includes, on each member, unique information of the cell phone 3, password of the member, and partial image of the body of the member, such as a face image. The reference information for authentication is stored as reference authentication information on an authentication reference information memory 62. The unique information and the password are determined by referring to the presence of perfect matching. In a match determination between an image photographed by the camera 35 of the cell phone 3 discussed later and the reference face image, feature points of a predetermined number are extracted, and matching is determined between the feature points. To increase accuracy level, a pattern recognition technique may be used. In one embodiment, the determination operation may be performed as described below. A display is arranged on the authentication server 6, an image received at the authentication request and the reference face image are displayed on the display, and an operator determines match observing the images on the display. If the operator determines that the member is an authorized member, the operator performs an operation of an authentication key issue instruction.

As described below, the cell phone 3 stores a given authentication key and in response to a service request, attaches the authentication key to information processed through the particular AP before transmitting the information to the computer terminal 21. The authentication key to be issued is preferably a one-time password that remains effective only during a given particular mode.

The e-mail system 4 is arranged between the cell phone 3 and the network 1, and functions as an information transmission system. The e-mail system 4 is connected to the network 1 via a carrier, and includes base stations of a predetermined number and information processing apparatuses. The base station, including an antenna, is a transceiver that transmits radiowave to and receives radiowave from the cell phone 3. The e-mail systems 4 of a predetermined number are arranged to distribute load. Similarly, the base stations of a predetermined number are arranged respectively on communication coverage areas. An information processing unit in the e-mail system 4 is known, and includes mail gateway, a mobile e-mail server, and a mail box. The mail gateway performs a conversion process between a format and protocol of a document file transmitted and received in the form of an e-mail by the cell phone 3 and a format and protocol of a document file transferred through the network 1 and transmitted and received between the computer terminal 21 and the authentication server 6. The mobile e-mail server controls the transmission and reception of the document file. The mail box temporarily stores the document files to be transmitted and received.

The transmission and reception of the document file may be performed in a packet that is formed typically in accordance with TCP/IP (transmission control protocol / internet protocol). The cell phone 3 restores an original document file from a received packet, and converts a file as a transmission target into a packet before transmitting the file. A header of each packet to be transmitted includes global IP addresses of a computer terminal 21 as a transmission source, and an authentication server 6, and a global IP address of the computer terminal 21 as a transmission destination.

The CDMA unit 36 of FIG. 2 includes an unillustrated router, or is serially connected to the router. The router sets address information (a routing table or an arp (Address Resolution Protocol) table). The router determines whether address information indicating a transmission destination attached to a predetermined location of each packet as a transmission signal or a reception signal is a global IP address complying with standards of the Internet, or a predetermined local IP address (MAC address), supporting Ethernet (registered trademark) or the like, for an exclusive network different from the global IP address in terms of attachment method (in a form discriminated from the global IP address). The packet is checked against the table, and is transmitted to only a route having an address matching the address of the packet. In this way, a transmission line is switched in a software fashion between via the Internet or via the exclusive network.

As illustrated in FIG. 2, the CPU 31 in the cell phone 3 reads a program from the ROM 31a onto the RAM 31b for storage, and then executes the program stored on the RAM 31b. The CPU 31 in the cell phone 3 thus functions as power source detector 311, key signal detector unit 312, startup processor 313, startup instruction unit 314, service mode selection processor 315, talk processor 316, e-mail transmission and reception processor 317, and versatile service content execution processor 318. The power source detector 311 detects power-on and power-off. The key signal detector unit 312 detects a key signal to be discussed below. The startup processor 313 starts up the CPU 31. The startup instruction unit 314 instructs the CPU 32 on the other side to start up. The service mode selection processor 315 receives an operation to select a desired service in the general mode. The talk processor 316 executes a talk process in the general mode. The e-mail transmission and reception processor 317 transmits or receives an e-mail in the general mode. The versatile service content execution processor 318 performs a variety of services in the general mode including a browse process, execution of a game, and schedule management, other than the talk process and the transmission and reception of e-mail.

On the other hand, the CPU 32 reads a program from the ROM 32a onto the RAM 32b for storage and then executes the program stored on the RAM 32b. The CPU 32 thus functions as power source detector 321, key signal detector unit 322, startup processor 323, startup instruction unit 324, authentication processor 325, service mode selection processor 326, service content processor 327, and communication processor 328. The power source detector 321 detects power-on and power-off. The key signal detector unit 322 detects a key signal to be discussed later. The startup processor 323 starts up the CPU 32. The startup instruction unit 324 instructs the CPU 31 on the other side to start up. The authentication processor 325 authenticates the cell phone 3 and the operator. The service mode selection processor 326 receives an operation to select a desired service in the particular mode. The service content processor 327 performs a process responsive to selected service content.

The authentication processor 325 includes an authentication operation guide unit 3251 and an authentication information retrieval unit 3252. The authentication operation guide unit 3251 guides an operator in the authentication operation. The authentication information retrieval unit 3252 executes a process in response to authentication success and failure results. The service content processor 327 includes a service content request processor unit 3271 and a service content execution processor unit 3272. The service content request processor unit 3271 requests from the computer terminal 21 the service content selected by the service mode selection processor 326. The service content execution processor unit 3272 executes the service content with the computer terminal 21.

As illustrated in FIGS. 3A and 3B, the cell phone 3 includes a lock unit 38 and a key 39 in pairs. The key signal generator 37 of FIG. 2 generates a key signal when the key 39 paired with the lock unit 38, i.e., the authentic key 39 matching only the lock unit 38, is set (inserted) in the lock unit 38. When a member is registered (or when the cell phone 3 has already been acquired), the key 39 is obtained in pairs with the cell phone 3 to be obtained.

FIGS. 3A and 3B diagrammatically illustrate a relationship of the cell phone 3, the lock unit 38, and the key 39. FIG. 3A is a partial perspective view illustrating a key hole position of the lock unit 38, and FIG. 3B is a partial view illustrating a relational mechanism between the lock unit 38 and the key 39. As known in related art, a main body 30 of the cell phone 3 includes the display 33 (see FIG. 2), and the operation unit 34 including numeric keys, function keys and the like. A key hole 380 of the lock unit 38 is arranged at a proper location, in this case, on a side face of the main body 30. The key 39 may be inserted in the key hole 380 from the tip thereof. The lock unit and the key are not limited to any particular types. In the embodiment, a known pin tumbler lock is used. As illustrated in FIG. 3B, the lock unit 38 includes a radially outside outer cylinder 381 and a radially inside inner cylinder 382 arranged in a colinear line. The lock unit 38 also includes pin holes of a specific number (five pin holes in FIG. 3B) arranged in a line of depth of the key hole corresponding to the cylinders 381 and 382. A driver pin 383 is arranged in a pin hole of the outer cylinder 381 and a key pin 384 is arranged in a pin hole of the inner cylinder 382 in a manner such that the driver pin 383 and the key pin 384 slide in the direction of the pin hole with the ends thereof engaging each other. If the key 39 is now inserted through the key hole 380, key pins 384 (thus driver pins 383) are raised toward the outer cylinder 381 in accordance with ruggedness of the key in the longitudinal direction of the key. Only if the engagement positions (borders) between all the driver pins 383 and all the key pins 384 match the borders between the outer cylinders 381 and the inner cylinders 382, the key 39 can be turned in the direction of arrows of FIG. 3B.

The key signal generator 37 as a sensor 370 is arranged at a place to which the key 39 is turned. More specifically, if the key 39 is turned and partially engaged with the sensor 370, the sensor 370 detects the engagement, and outputs an electric signal as a detection signal. The cell phone 3 may be stolen by a thief, but if the key 39 that may be held on a key holder is not stolen together, the thief is unable to enter a particular mode environment with stolen identity. The cell phone 3 is thus provided with high security.

The sensor 370 may be of a limit switch type that generates and outputs a signal when a blade of a limit switch changes a position thereof in response to a mechanical engagement of the key 39. In another embodiment, the key 39 (or part of the key 39) may be a magnet and the sensor 370 may be a magnetic sensor. When the key 39 is turned to be close to the sensor 370, the sensor 370 senses magnetism. In yet another embodiment, the key 39 may be manufactured of a dielectric material, and the sensor 370 may be a dielectric sensor. The sensor 370 senses a change in permittivity and thus functions as a proximity sensor. In this way, the sensor 370 determines whether the key 39 is paired with the lock unit 38 of the cell phone 3, i.e., whether the key 39 is authentic with the cell phone 3. It is noted that if the key 39 is reversely turned to the original position thereof, the key 39 is ready be pulled out of the key hole 380.

Referring back to FIG. 2, the power source detectors 311 and 321 detect a change in a voltage of a power source and thus power-on and power-off of the power source if a power switch is continuously pressed as one element of the operation unit 34 (the power switch is like a specific one of the numeric keys that operates cyclically and if specific numeric key is continuously pressed for a specific period of time, power is on, and if the specific numeric key is continuously pressed for the specific period of time with power on, power is off). The power source supplies power to drive each circuit element in the cell phone 3. The power source is a secondary battery, for example, and may be charged from a commercial power supply to be reused, i.e., is thus rechargeable. The key signal detector units 312 and 322 detect as a key signal a signal from the key signal generator 37, and further detect a down-signal (off-signal) when the key 39 is pulled out of the key hole 380.

If no key signal is detected in the middle of a startup operation of BIOS 1 in response to power-on, the startup processor 313 continues to load BIOS 1 to start up the CPU 31. If a key signal is detected, the startup processor 313 shuts down BIOS 1 in the middle of the startup operation. If a key signal is detected in the middle of a startup operation of BIOS 2 in response to power-on, the startup processor 323 continues to load BIOS 2 to start up the CPU 32. If no key signal is detected, the startup processor 323 shuts down BIOS 2 in the middle of the startup operation. It is noted that since one of the CPUs 31 and 32 is started up, a CPU that is to start up may shut down a CPU that is to shut down.

If a key signal is detected in the middle of the operation of the CPU 31 in the general mode, the startup instruction unit 314 instructs the CPU 32 on the other side to start up while shutting down the CPU 31 on this side. If turnoff of the key signal is detected in the middle of the operation of the CPU 32 in the particular mode, the startup instruction unit 324 instructs the CPU 31 on the other side to start up while shutting down the CPU 32 on this side. It is noted that the particular mode is set to be active throughout the period in which the key 39 remains inserted in the lock unit 38, but the present invention is not limited to this arrangement. The insertion of the key 39 into the lock unit 38 triggers an instruction to switch to the particular mode, and the reinsertion of the key 39 into the lock unit 38 in the particular mode triggers an instruction to cancel the particular mode. In this arrangement, the particular mode remains effective if the key 39 is pulled out of the lock unit 38 during a period from the switch instruction to the cancel instruction.

In response to the reception of operation content by the operation unit 34 in the general mode, the service mode selection processor 315 performs a selection process of a service mode (content) desired by the operator. In response to the reception of operation content by the operation unit 34 in the particular mode, the service mode selection processor 326 performs a selection process of a service mode (content) desired by the operator.

The sensor 370 outputs a key signal when the cell phone 3 enters the particular mode, i.e., when the key 39 is inserted into the lock unit 38 and then turned in a specific direction. When the key signal detector unit 322 detects the key signal, the communication processor 328 sets a communication route to be a route in accordance with a MAC address outside the Internet in the same manner as in the particular mode. The authentication operation guide unit 3251 performs a process to guide the operator in a personal authentication operation. For example, the authentication operation guide unit 3251 displays a screen (or gives audio) to guide the operator in a password input operation, and displays a guide screen (or gives audio guide) to the operator to cause the camera 35 to photograph part of the body of the operator, for example, the face of the operator. The authentication processor 325 retrieves an input password, and executes a retrieval operation of a photographed face image. The retrieved password and face image are associated with the unique information of the cell phone 3, and the resulting information is transmitted from the communication processor 328 and the CDMA unit 36 to the authentication server 6. If the authentication process has been completed successfully, the authentication information retrieval unit 3252 executes a retrieval process of an authentication key. If not, the authentication information retrieval unit 3252 performs a process to prompt a re-execution of the authentication process.

The service content request processor unit 3271 generates request content that causes the computer terminal 21 to perform the service content selected by the service mode selection processor 326. The service content request processor unit 3271 attaches the authentication key to the request content and then transmits the resulting information via the communication processor 328 and the CDMA unit 36. The service content execution processor unit 3272 executes service content depending on service request content with the computer terminal 21. For example, if issuance of a specific certificate is requested, the service content execution processor unit 3272 performs only a reception operation of a digital certificate.

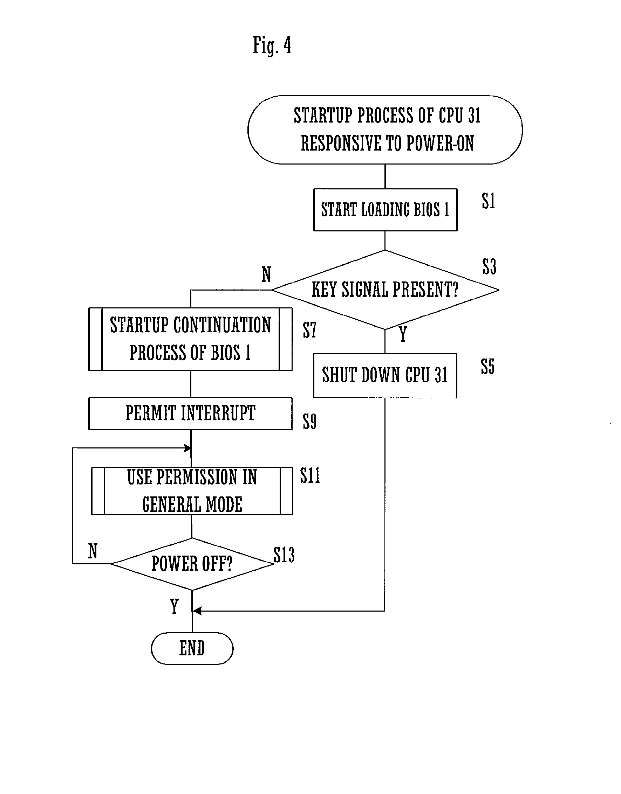

FIG. 4 is a flowchart illustrating an example of a routine of a startup process of the CPU 31 performed by the CPU 31 in response to power-on. Upon detecting power-on, the CPU 31 loads BIOS 1 and starts up BIOS 1 (step S1). A determination operation of determining whether the key signal is present or not is performed during the startup of BOIS 1 (step S3). If a key signal is detected, a force shutdown of the CPU 31 is instructed (step S5), and the CPU 31 exits the routine. If no key signal is detected, the startup operation of BIOS 1 continues (step S7). The startup of the CPU 31 is thus complete. An interrupt permit is provided (step S9). An interrupt is generated if any change in the presence or absence of the key signal is later detected. Next, the use of the cell phone 3 in the general mode is permitted (step S11). The CPU 31 determines whether power is turned off or not (step S13). If power is not turned off, processing returns to step S11. If power is turned off, the CPU 31 completes the routine.

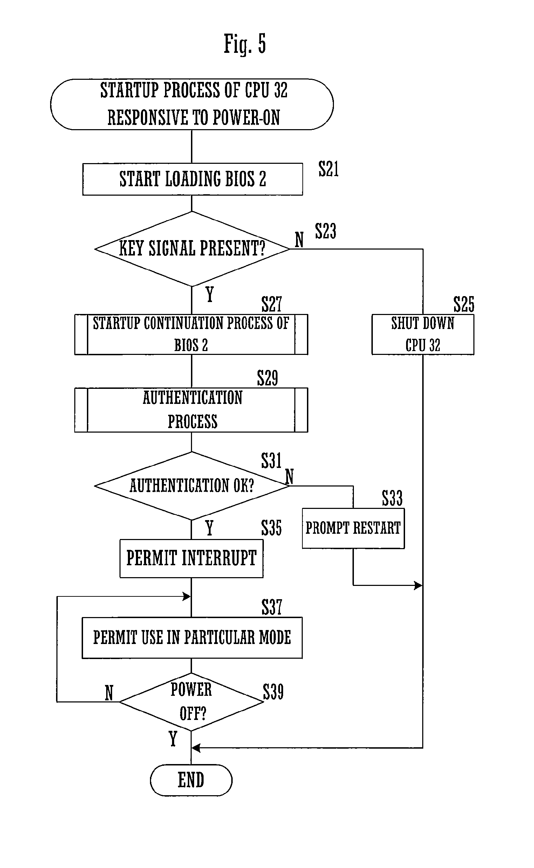

FIG. 5 is a flowchart illustrating an example of a routine of a startup process of the CPU 32 performed by the CPU 32 in response to power-on. Upon detecting power-on, the CPU 32 loads BIOS 2 and starts a startup process of BIOS 2 (step S21). A determination operation of determining whether the key signal is present or not is performed during the startup of BOIS 2 (step S23). If a key signal is not detected, a force shutdown of the CPU 32 is instructed (step S25), and the CPU 32 exits the routine. If a key signal is detected, the startup operation of BIOS 2 continues (step S27). The startup of the CPU 32 is complete. The CPU 32 performs the authentication process (step S29). If the authentication process fails to verify authenticity (no from step S31), the CPU 32 issues an instruction to guide a restart prompt (step S33), and then exits the routine. The execution of the restart may be conditional on the number of authentication failures. If the authentication process is successful (yes from step S31), an interrupt permit is provided (step S35). The use of the cell phone 3 in the particular mode is permitted (step S37). Therefore, the cell phone 3 is usable in the particular mode from the power-on.

The CPU 32 determines whether power is turned off (step S39). If power is not turned off, processing returns to step S37. If power is turned off, the CPU 32 exits the routine. Since information is transmitted and received in the particular mode under the control of the CPU 32, the information is isolated from information in the general mode. The particular mode results in a high-security network.

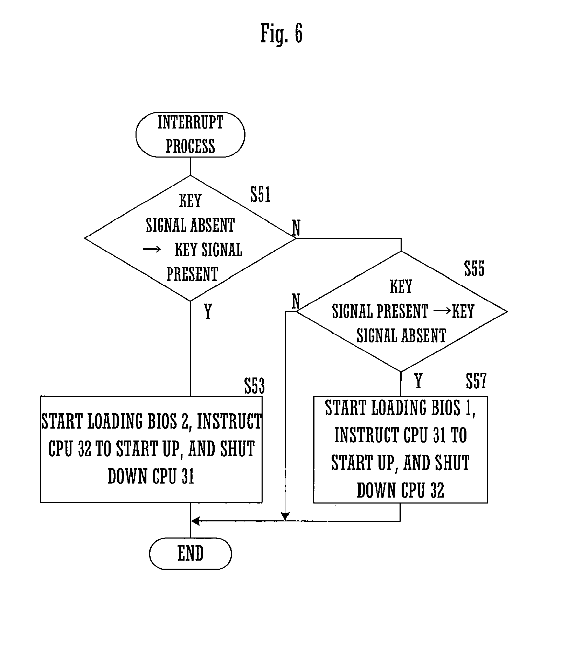

FIG. 6 is a flowchart illustrating an example of a routine of an interrupt process executed by the CPUs 31 and 32. The currently operating CPU may be the CPU 31. If the CPU 31 detects a change from the "absence" of the key signal to the "presence" of the key signal (yes from step S51), the CPU 31 outputs an instruction for the CPU 32 to start up (startup of the loading of BIOS 2), and shuts down the CPU 31 itself (step S53). Even in the use environment in the general mode, the use environment in the particular mode may be obtained from a desired point of time.

On the other hand, the currently operating CPU may be the CPU 32. If the CPU 32 detects a change from the "presence" of the key signal to the "absence" of the key signal (yes from step S55), the CPU 32 outputs an instruction for the CPU 31 to start up (startup of the loading of BIOS 1), and shuts down the CPU 32 itself (step S57).

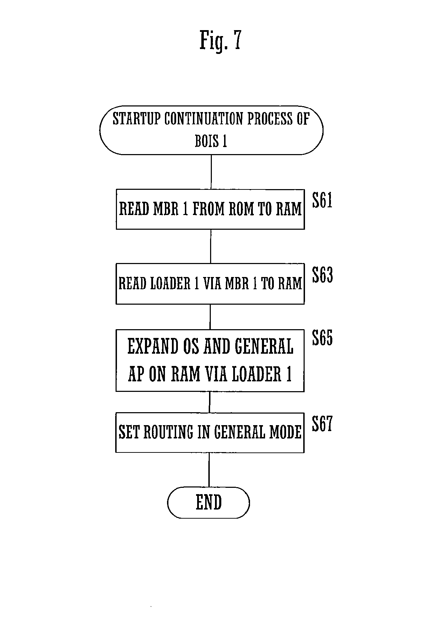

FIG. 7 is a flowchart illustrating an example of a routine of a startup continuation process of BIOS 1 executed by the CPU 31. If the CPU 31 determines that no key signal is present, BIOS 1 reads MBR 1 from the ROM 31a onto the RAM 31b (step S61), and the read MBR 1 reads a loader onto the RAM 31b (step S63). Next, OS 1 and the general AP are read onto the RAM 31b (step S65). Next, route setting in the general mode is performed (step S67).

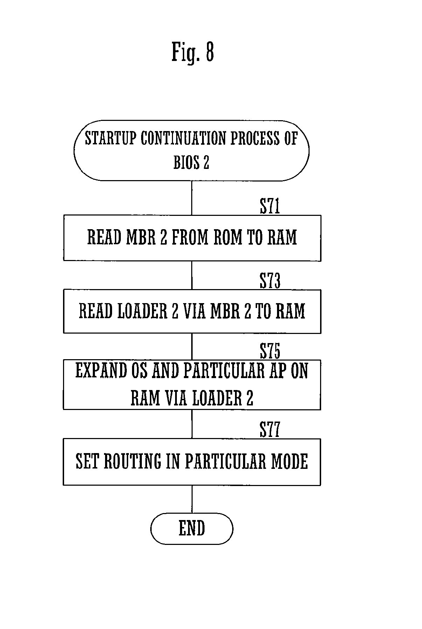

FIG. 8 is a flowchart illustrating an example of a routine of a startup continuation process of BIOS 2 executed by the CPU 32. If the CPU 32 determines that a key signal is present, BIOS 2 reads MBR 2 from the ROM 32a onto the RAM 32b (step S71), and the read MBR 2 reads a loader onto the RAM 32b (step S73). Next, OS 2 and the particular AP are read onto the RAM 32b (step S75). Next, route setting in the particular mode is performed (step S77).

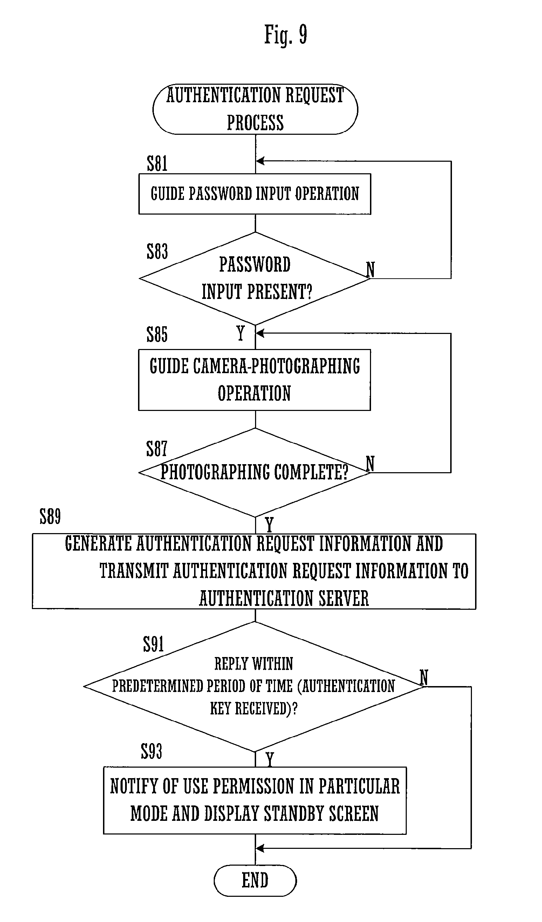

FIG. 9 is a flowchart illustrating an example of a routine of an authentication request process executed by the CPU 32. The CPU 32 displays a guide screen for an input operation of a password on the display 33 (step S81). The guide screen includes four boxes if the password is a four-digit number. The operator may press a specific numeric key of the operation unit 34. Each time the operator presses a specific numeric key, one of the boxes are successively indicates an entry of the corresponding number starting with the leading box. The four-digit password is thus entered. When the inputting of the password is complete (step S83), a guide screen is displayed to guide the operator to photograph part of a particular location of the body of the operator with the camera (step S85). The guide screen for the camera photographing includes a picture of the camera 35 of the cell phone 3, a release button of the camera 35, and an imitation image of person, or an animated moving image representing a camera photographing action. The password and the human body photographing are authentication requirements. Even in the use environment in the particular mode, information can be transmitted and received in practice only after authentication information is generated and the generated authentication information is authenticated. Even higher security communication is provided.

When the camera photographing is complete (step S87), unique information written on the unique information memory 301 is attached to the information of the password and the photographed image to generate authentication request information. The same routing process as in the particular mode is performed on the authentication request information and then transmitted to the authentication server 6 (step S89). Next, the CPU 32 determines whether information of an authentication key indicating authentication success has been returned from the authentication server 6 within a constant period of time (step S91). If the authentication key has not returned, the CPU 32 exits the routine. On the other hand, if an authentication key has been returned, the CPU 32 displays a notification screen for use permit of the particular node. A service standby screen in the particular mode remains displayed (step S93).

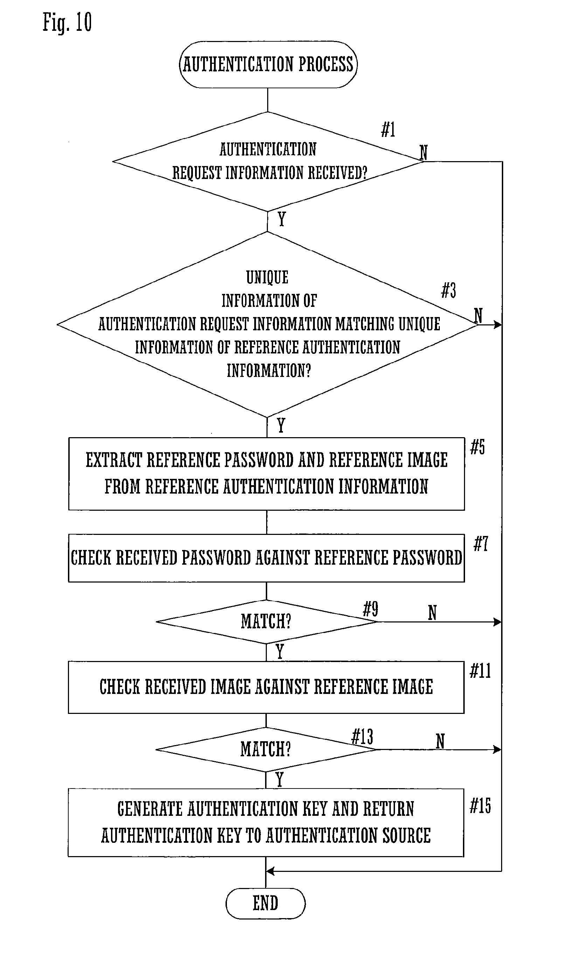

FIG. 10 is a flowchart illustrating an example of a routine of an authentication process executed by the controller 61 in the authentication server 6. The controller 61 first determines whether the authentication request information has been received from any cell phone 3 (step #1). If the authentication request information has not been received, the controller 61 exits the routine. On the other hand, if the authentication request information has been received from any cell phone 3, the unique information of the cell phone is extracted from the received authentication request information, and is then checked against the unique information in the reference authentication information of the authentication reference information memory 62 (step #3). If check results indicate no match in the unique information, the controller 61 exits the routine. If matching unique information is present, a reference password and a reference image mapped to the received unique information are extracted (step #5). The received password is checked against the reference password (step #7). If no match results (no from step #9), the controller 61 exits the routine. If the controller 61 determines that the received password matches the reference password, the received photographed image is checked against the reference image (step #11). If no match results (no from step #13), the controller 61 exits the routine. On the other hand, if the controller 61 determines the received photographed image matches the reference image, the authentication key is generated. The authentication key is associated with the unique information of the cell phone 3 and then stored on the authentication server 6. The authentication key is then returned to the cell phone 3 as a transmission source (step #15).

The computer terminal 21 may receive a service request from the cell phone 3 later. In that case, the computer terminal 21 may extract information of the authentication key attached to the service request and may verify with the authentication server 6 authenticity of a correspondence relationship between the unique information of the cell phone 3 and the authentication key. The authentication server 6 stores a newly generated authentication key for each piece of unique information of the cell phone 3 for a predetermined period of time. The storage period may be a period of the particular mode at that point of time. If the authentication key is a fixed type, the storage period may be determined in view of security, for example, one day to several days.

The authentication key generated by the authentication server 6 may be a fixed type for each cell phone. In view of security, the authentication key may be preferably a one-time password. The one-time password is preferably randomly generated using a random number generator or the like.

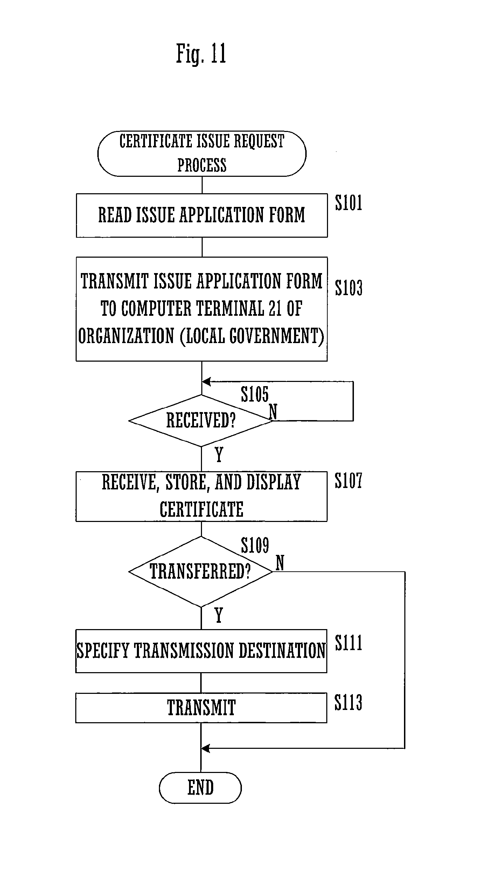

FIG. 11 is a flowchart illustrating an example of a routine of a retrieval process of a certificate performed as an example of transmission and reception of information with the computer terminal 21 by the CPU 32 in the particular mode. In this example, the computer terminal 21 is installed at (an office of) a local government that issues a variety of certificates in an electronic form. In the discussion that follows, a member after being personal-authenticated requests the office to issue an electronic certificate, such as a certificate of seal, using the member's own cell phone 3. After receiving the certificate, the member transmits (electronically supplies) the certificate of seal to the banking entity computer terminal 23 of a bank which has demanded the certificate. The banking entity computer terminal 23 installed at the bank is summarized in embodiment (1) discussed below.

First in the particular mode, an issue application for the certificate of seal is read from the particular AP, and the computer terminal 21 at the local government (the office in the residential area of the member) is specified (step S101). The issue application is transmitted to the computer terminal 21 as an issue request (step S103). The unique information and the authentication key of the cell phone 3 are attached to the information to be transmitted from the cell phone 3 in the particular mode. A computer terminal at a receiver side, for example, the computer terminal 21 transmits the unique information and the authentication key extracted from the received information to the authentication server 6 for authenticity verification of the transmission source. The verification process of authenticity is thus enabled.

Next, the CPU 32 enters a reception waiting state for the applied certificate of seal (step S105). If the certificate of seal is received, the received certificate of seal is displayed on the display 33 (step S107). The received certificate of seal is stored on the RAM 32b temporarily. Next, the CPU 32 checks the presence or absence of an instruction to transfer the certificate of seal (step S109). If an instruction to transfer the certificate of seal is present, a transfer destination of the received certificate of seal, for example, the banking entity computer terminal 23 of a specific bank is specified (step S111). If the transfer destination is specified, the certificate of seal is transferred to the banking entity computer terminal 23 of the specific bank (step S113). On the other hand, if no instruction to transfer the certificate of seal is present, the CPU 32 exits the routine.

Log of information (time, type of document, type of transmission and reception, and partner of transmission and reception) transmitted and received by the cell phone 3 in the particular mode is stored on the member server 5 as a log in principle. The verification process of authenticity described above is also stored on the authentication server 6 as a log to the unique information for a specific period of time (for the period of one particular mode or an effective period of the certificate).

If the certificate is transferred from the cell phone 3, the banking entity computer terminal 23 at the bank extracts the unique information and the authentication key from the transfer information to verify authenticity of the certificate, and then transmits the unique information and the authentication key to the authentication server 6. By referencing the log information, the banking entity computer terminal 23 performs the verification process of authenticity.

High security is achieved on the network by extracting the unique information and the authentication key from the transmitted information, and by performing authenticity verification on the information on the authentication server 6. If the authentication key is a one-time password, the authenticity verification remains effective only during one particular mode. The authenticity verification is not limited to the computer terminals 21 and 23, but is performed on the cell phone 3 as well. Furthermore, the authenticity verification may be equally performed on a business entity computer terminal 22 of a vendor described in the embodiment (1) described below.

(1) The embodiment described above is related to the computer terminal 21 that issues the certificate or the like. The present invention is not limited to the embodiment. An embodiment described below is also implemented. A network communication system may be built between the business entity computer terminal 22 that is installed at a vendor or the like as a member, instead of the computer terminal 21, or in addition to the computer terminal 21, and the banking entity computer terminal 23 that is installed at a banking institution, like a bank, and assists settlement of business transactions occurring among members.

The computer terminals 21 through 23 store a program file of a computer version supporting the particular AP stored on the cell phone 3. The computer terminals 21 through 23 may be dedicated terminals that perform, in accordance with a program of the program file, an information process (particular mode) with a partner who is granted connection. Alternatively, the computer terminals 21 through 23 may be of a mode switchable type switchable between the two modes and may perform a general AP in which document creation software, and software for communications via the Internet, and for searching and viewing information are set to be usable (general mode). In the particular AP, the mode switchable type permits connection to another network such as NGN (Next Generation Network) in place of the Internet. In the general mode, information is generally processed. More specifically, information is generated, processed, and stored using typical document and drawing creation software, and information is transmitted and received using communication software.

In the computer terminals 22 and 23, the particular AP is loaded from an internal ROM after booting. The particular AP includes software that produces and communicates documents related to buying or selling of products and services, asking for cost estimate of and billing charge for products and services, and payment and money received (documents related to so-called business dealing), and software for a predetermined authentication process as necessary. As the cell phone 3, using the particular AP, the computer terminals 22 and 23 settle typical business transactions, for example, issue a bill from a store, receives a bill from a store, issue an instruction sheet to transfer money from a buyer to an account of an banking institution of a bill issuer (i.e., payment), issue a receipt of the money, and perform a transmission and reception process in a variety of digital documents of a business transaction regardless of whether the settlement of the business transaction is performed in electronic settlement. The particular AP can produce a variety of documents in an electronic file in text format or binary format. The electronic files may be transmitted or received among the business entity computer terminals 22 and 23, and the cell phone 3 via the member server 5 (or in parallel with the member server 5), for example. Installed on the banking entity computer terminal 23 of each banking institution is a particular AP that performs a settlement instruction process (an instruction to perform a settlement process between the banking institutions and the like) in accordance with a banking settlement document.

(2) In the embodiment, a match signal is output from the sensor 370 if the key 39 and the lock unit 38 are an authentic pair. Instead of or in addition to this arrangement, information unique to the key 39 may be generated. For example, the key 39 may be an electronic key having code information of a predetermined bit number recorded thereon (the code information may be recorded magnetically, or using an electrode structure or using a light-transmissive and light-blocking structure), and the lock unit 38 may include a sensor (a magnetic sensor, a voltmeter or a light sensor) to read the code information. For example, the key 39 may have magnetic code information composed of a predetermined number of on/off bits where a small magnet is present in an on bit position while a small magnet is absent in an off bit position. The lock unit 38 may read the code information through scanning or may include magnetic sensors of the same number of bits arranged to read the magnetic code. With the embodiment replaced with the embodiment (2), no turning operation is needed subsequent to the insertion of the key 39 into the key 39. The lock unit 38 and the key 39 are simplified in structure. The code signal of the key is stored on the unique information memory 301 in the cell phone 3. By checking the read code signal against the stored code signal, the authentication request process may be permitted in the same routing selection as in the particular mode. The code signal of the key is thus effectively used as an authenticity verification factor of the key.

(3) In the embodiment, the other CPU is instructed to start up and the CPU on this side is shut down by setting or not of the key 39. In an alternative embodiment, when an authentic key 39 to be paired is inserted and turned, the CPU 31 normally connected to a power source line is mechanically disconnected from the power source line, and only in such a case, the CPU 32 is connected to the power source line. A capacitive element such as a capacitor is arranged at the power source line to the CPUs 31 and 32 to control a sharp voltage drop. The CPUs 31 and 32 detect an insertion and withdrawal operation of the key, or detect a gradual voltage fall at the capacitor. And by these detections, the startup instruction of the other CPU is provided and the shutdown operation of the CPU on this side is performed within a short period of time.

(4) In the embodiment, the check targets are the password input using the operation unit 33 and the face image photographed via the camera 35. The present invention is not limited to this arrangement. One of the password and the face image may be used. A portion of the subject photographed through the camera 35 is not limited to the image of the face, and any portion of the subject is acceptable as long as the portion of the subject is identifiable.

(5) In the embodiment, the cell phone 3 is discussed as an example. The present invention is not limited to the cell phone 3, and is widely applicable to a mobile information terminal that communicates with outside, such as PDA (personal Digital Assistants).

(6) In the embodiment, a secure network is constructed in the particular mode through route setting via the MAC address. Besides the route setting method, different physical networks may be used, for example, the Internet is used in the general mode, and NGN (Next Generation Network) is used in the particular mode.

As described above, the mobile communication terminal of the present invention includes a first CPU that controls transmission of information to and reception of information from another communication terminal via a first network in response to an operation to an operation unit of a main body of the mobile communication terminal. The mobile communication terminal preferably includes a lock that is formed on an appropriate location of the main body and permits a unique key to be paired with the main body to be set therein, key signal generator means that generates a key signal when the unique key to be paired is set in the lock, and startup means that, in response to a reception of the key signal from the key signal generator means, starts up a second CPU that executes transmission and reception of information via a second network instead of the first network. Since information is transmitted and received via the second network under the second CPU with this arrangement, the information is isolated from information transmitted and received via the first network. The second network is set to be a high security network accordingly. The lock serving as a structural feature of the main body is mechanically coupled with the key serving as an additional structure to be paired with the lock. Only when the key to be paired is used, a particular use mode (particular mode) environment featuring high security is provided instead of a standard use mode (general mode).

When the setting of the key to be paired in the lock is detected, the key signal generator means preferably generates the key signal. With this arrangement, the key signal is generated with the key inserted into the lock. A particular use mode environment is difficult to obtain even if the key is stolen and illegally owned.

The setting of the key to be paired in the lock is preferably detected by one of mechanical means, electrical means, and magnetic means. With this arrangement, the mobile communication terminal becomes versatile because one of a mechanical detection method, an electrical detection method and a magnetic detection method may be used in response to the specifications of the mobile communication terminal.

When the key to be paired is set in the lock, the key signal generator means preferably outputs to the first and second CPUs unique information set in the key to be paired. With this arrangement, not only the insertion of the key into the lock is detected, but also the unique information of the key is obtained. The first and second CPUs may effectively use the information of the key as an authenticity verification factor.

The mobile communication terminal preferably includes a power switch, wherein the startup means starts up the second CPU if the power switch is turned on with the key to be paired set in the lock. With this arrangement, the use environment of the second network is available from the moment of power-on of the mobile communication terminal.

When the key is inserted in a key hole to be paired with the key during operation of the first CPU, the startup means preferably suspends the operation of the first CPU while starting up the second CPU. With this arrangement, the use environment of the second network is available from a desired point of time even in the use environment of the first network.

The mobile communication terminal preferably includes a biometric information detector that acquires biometric information of an operator, and communication processing means that, when the second CPU is started up, transmits to an authentication server arranged over the second network, at least password information input via the operation unit or the biometric information of the operator acquired by the biometric information detector, as authentication information, and then receives an authentication result. With this arrangement, the authentication information is generated even in the use environment of the second network, and information cannot be transmitted or received without the authentication information being authenticated. Even higher security communication is thus provided.

The biometric information detector is preferably a camera that photographs a subject, wherein the biometric information is an image resulting from photographing a predetermined location of the operator who has been photographed by the camera, and wherein the authentication server has registered as a check reference image the image of the predetermined location of a holder of the key to be paired. With this arrangement, even if the mobile communication terminal and the key are stolen by an unscrupulous person, the unscrupulous person does not know the password, and the location of the human body to be photographed through the camera, and cannot generate the authentication information.

### Reference Signs List

| | |
|---|---|
| 1 | Network |
| 21-23 | Computer terminals |
| 3 | Cell phone |
| 30 | Main body |
| 31 | CPU (first CPU) |
| 32 | CPU (second CPU) |
| 301 | Unique information memory |
| 33 | Display |
| 34 | Operation unit (power switch) |
| 35 | Camera (biometric information detector) |
| 36 | CDMA unit (part of communication processing means) |
| 37 | Key signal generator (key signal generator means) |
| 370 | Sensor |
| 38 | Lock unit (lock) |
| 39 | Key |
| 311 and 312 | Power source detectors |
| 312 | Key signal detector unit |
| 322 | Key signal detector unit (part of startup means) |
| 313 | Startup processor |
| 323 | Startup processor (part of the startup means) |
| 314 and 424 | Startup instruction units |
| 325 | Authentication processor |
| 326 | Service mode selection processor |
| 327 | Service content processor |
| 328 | Communication processor (part of the communication processing means) |
| 5 | Member server |
| 6 | Authentication server |
| 61 | Controller |
| 62 | Authentication reference information memory |

## Claims

1. A mobile communication terminal having a first CPU that controls transmission of information to and reception of information from another communication apparatus via a first network in response to an operation to an operation unit of a main body of the mobile communication terminal, the mobile communication terminal comprising:
a lock that is formed on an appropriate location of the main body and permits a unique key to be paired with the main body to be set therein,
key signal generator means that generates a key signal when the unique key to be paired is set in the lock, and
startup means that, in response to a reception of the key signal from the key signal generator means, starts up a second CPU that executes transmission and reception of information via a second network instead of the first network.

2. The mobile communication terminal according to Claim 1, wherein when the setting of the key to be paired in the lock is detected, the key signal generator means generates the key signal.

3. The mobile communication terminal according to Claim 2, wherein the setting of the key to be paired in the lock is detected by one of mechanical means, electrical means, and magnetic means.

4. The mobile communication terminal according to one of Claims 1 through 3, wherein when the key to be paired is set in the lock, the key signal generator means outputs to the first and second CPUs unique information set in the key to be paired.

5. The mobile communication terminal according to one of Claims 1 through 4, comprising a power switch, wherein the startup means starts up the second CPU if the power switch is turned on with the key to be paired set in the lock.

6. The mobile communication terminal according to one of Claims 1 through 5, wherein when the key is inserted in a key hole to be paired with the key during operation of the first CPU, the startup means suspends the operation of the first CPU while starting up the second CPU.

7. The mobile communication terminal according to one of Claims 1 through 6, comprising:
a biometric information detector that acquires biometric information of an operator, and
communication processing means that, when the second CPU is started up, transmits to an authentication server arranged over the second network, at least password information input via the operation unit or the biometric information of the operator acquired by the biometric information detector, as authentication information, and then receives an authentication result.

8. The mobile communication terminal according to Claim 7, wherein the biometric information detector is a camera that photographs a subject, wherein the biometric information is an image resulting from photographing a predetermined location of the operator who has been photographed by the camera, and wherein the authentication server has registered as a check reference image the image of the predetermined location of a holder of the key to be paired.

9. A startup method of a mobile communication terminal having a first CPU that controls transmission of information to and reception of information from another communication apparatus via a first network in response to an operation to an operation unit of a main body of the mobile communication terminal, the startup method comprising:
a step of generating by key signal generator means a key signal when a unique key to be paired with the main body is set in a lock formed on an appropriate location of the main body, and
a step of starting up, by startup means in response to a reception of the key signal from the key signal generator means, a second CPU that executes transmission and reception of information via a second network instead of the first network.

10. A network communication system comprising the mobile communication terminal according to one of Claims 1 through 8 connected to the first and second networks, and a computer terminal connected to the second network, wherein information is transmitted and received between the mobile communication terminal and the computer terminal if the second CPU is started up.
